# EUROPEAN PATENT APPLICATION

(11) **EP 4 851 480 A1**
(43) Date of publication of application: **09.12.2026**
(21) Application number: 24921996.5
(22) Date of filing: 03.12.2024
(51) Int. Cl.: F16D 65/092, F16D 65/02, F16D 65/847

(54) **DISC BRAKE AND FRICTION PAD**

(30) Priority: 31.01.2024 JP 2024012508
(71) Applicant: Astemo, Ltd., Chiyoda-ku, Tokyo 1000004 (JP)
(72) Inventor: SASAKI, Yuki, Hitachinaka-shi, Ibaraki 3128503 (JP)
(74) Representative: Hoefer & Partner Patentanwälte mbB
(86) International application number: PCT/JP2024/042621
(87) International publication number: WO 2025/164078

(57) **Abstract**

This disc brake 1 increases the surface area of a projection part provided on a back plate of a friction pad while avoiding interference with components around a caliper body, and comprises: a caliper body 3 including action parts 3a, 3b connected by a bridge part; and a pair of friction pads 4. The bridge part includes a disc turn-in side bridge part 3c, a disc turn-out side bridge part 3d, and an intermediate bridge part 3e, and has a first ceiling opening 3f between the disc turn-in side bridge part 3c and the intermediate bridge part 3e, and a second ceiling opening 3g between the disc turn-out side bridge part 3d and the intermediate bridge part 3e. The friction pad 4 has, on a back plate 4a to which a lining 4c is attached, a plurality of projection parts 4f that are inserted into the first ceiling opening 3f and the second ceiling opening 3g. A projection 4g projecting to a disc rotor 2 side is formed in each projection part 4f.

## Description

### Technical Field

The present invention relates to a disc brake and a friction pad of the disc brake, and more particularly to a disc brake and a friction pad of the disc brake having a structure for dissipating braking heat to the outside air.

### Background Art

In the related art, in a vehicular disc brake, in order to prevent a temperature of a working fluid from rising due to braking heat generated by friction between a lining (friction part) of a friction pad and a disc rotor at the time of braking, a plate-shaped projection part projecting from a ceiling opening of a caliper body to the outside is provided on a back plate of the friction pad, and the braking heat is dissipated to the outside air through the projection part (for example, see PTL 1).

### Citation List

### Patent Literature

PTL 1: WO2021070892A1

### Summary of Invention

### Technical Problem

However, in the structure of PTL 1 described above, when surface area of the projection part is increased in order to increase the amount of heat dissipation, the projection part may interfere with components around the caliper body such as a wheel due to a change in shape of the projection part, and the increase in the surface area is limited.

Therefore, an object of the invention is to provide a disc brake and a friction pad capable of increasing surface area of the friction pad and improving cooling performance while avoiding interference with components around a caliper body.

### Solution to Problem

In order to achieve the above object, a disc brake according to the invention is configured including: a caliper body having a ceiling opening in a bridge part straddling an outer periphery of a disc rotor; and a pair of friction pads disposed on both sides of the disc rotor with the disc rotor interposed therebetween. Each of the friction pads has a projection part, to be inserted into the ceiling opening, on a back plate provided with a friction part, and the projection part has a projection projecting at least toward a disc rotor side.

A friction pad according to the invention is provided with a friction part on one side surface of a back plate, the back plate has a projection part projecting in one direction from an end surface adjacent to the one side surface, and the projection part has a projection projecting in a thickness direction of the friction pad on at least a side of the one side surface.

### Advantageous Effects of Invention

According to the disc brake and the friction pad of the disc brake of the invention, it is possible to increase surface area of the projection part and improve the cooling effect while avoiding interference with components around the caliper body.

### Brief Description of Drawings

[FIG. 1] FIG. 1 is a cross-sectional view taken along a line I-I in FIG. 3.
[FIG. 2] FIG. 2 is a front view of a disc brake according to a first embodiment of the invention.
[FIG. 3] FIG. 3 is a plan view of the same.
[FIG. 4] FIG. 4 is a front view of a friction pad of the same.
[FIG. 5] FIG. 5 is a side view of the friction pad of the same.
[FIG. 6] FIG. 6 is a rear view of the friction pad of the same.
[FIG. 7] FIG. 7 is a perspective view of the friction pad of the same.
[FIG. 8] FIG. 8 is a front view of a friction pad of a disc brake according to a second embodiment of the invention.
[FIG. 9] FIG. 9 is a side view of the friction pad of the same.
[FIG. 10] FIG. 10 is a rear view of the friction pad of the same.
[FIG. 11] FIG. 11 is a perspective view of the friction pad of the same.
[FIG. 12] FIG. 12 is a cross-sectional view taken along a line XII-XII in FIG. 14.
[FIG. 13] FIG. 13 is a front view of a disc brake according to a third embodiment of the invention.
[FIG. 14] FIG. 14 is a plan view of the same.
[FIG. 15] FIG. 15 is a plan view of the same during operation.

### Description of Embodiments

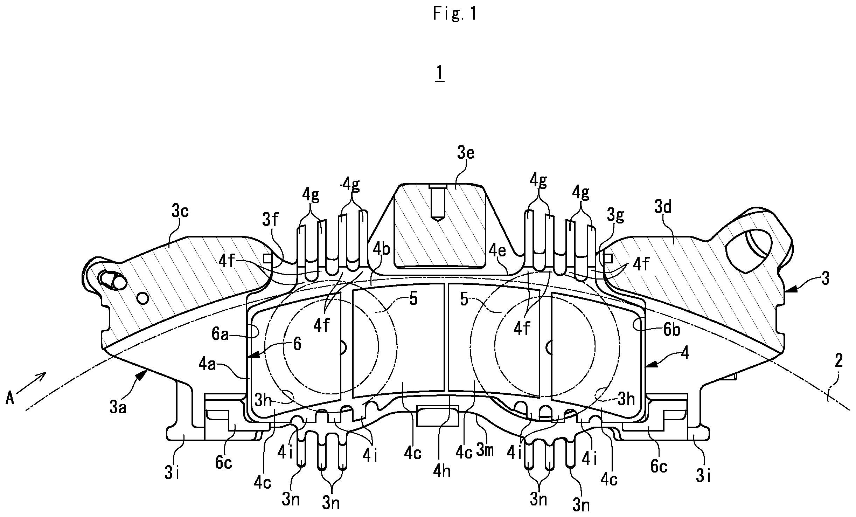

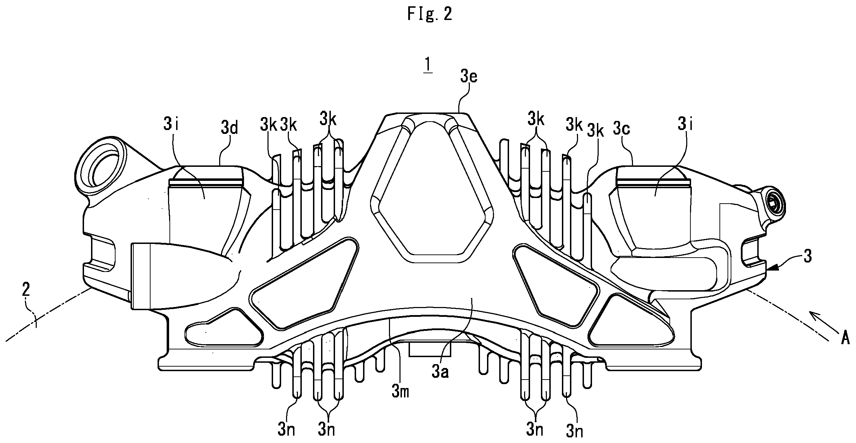

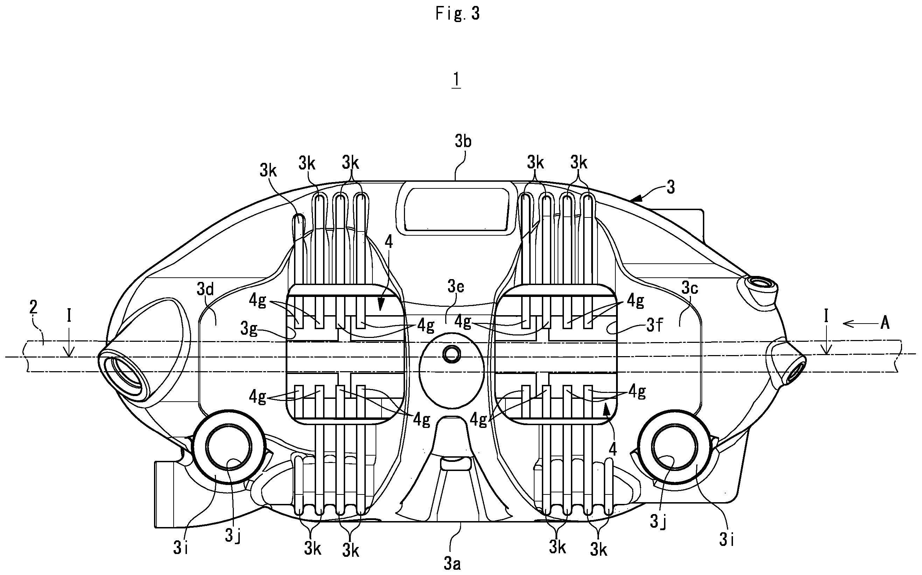

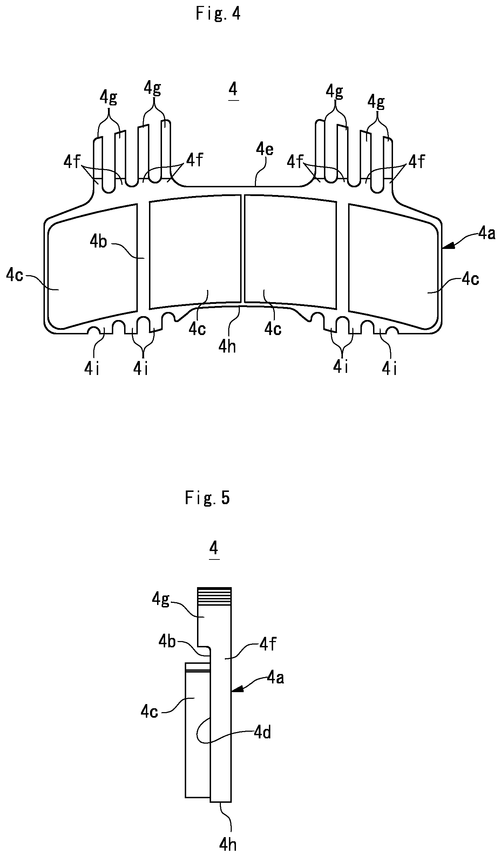

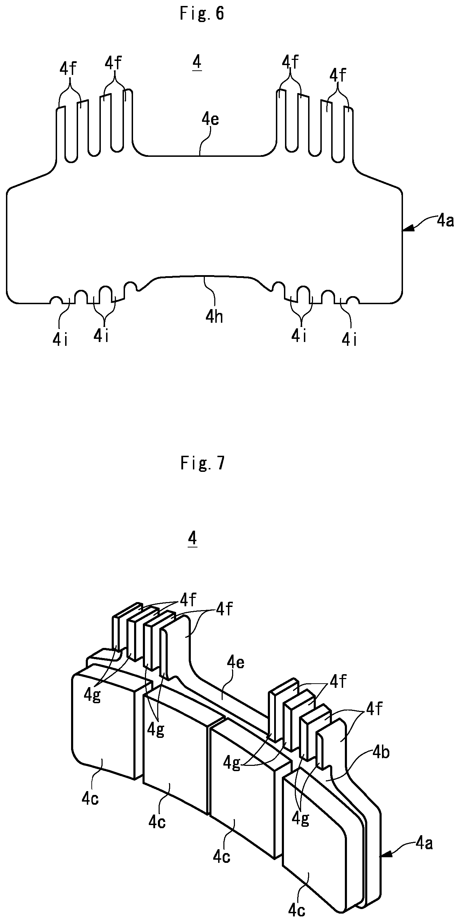

FIGS. 1 to 7 are views showing a disc brake according to a first embodiment of the invention. An arrow A indicates a rotation direction of a disc rotor that rotates integrally with a wheel when a vehicle moves forward. A disc turn-out side and a disc turn-in side as described below are assumed when the vehicle moves forward.

A disc brake 1 includes a disc rotor 2 that rotates integrally with a wheel, a piston-facing caliper body 3 mounted on a vehicle body on one side portion of the disc rotor 2, and a pair of friction pads 4 and 4 arranged with the disc rotor 2 interposed therebetween between action parts 3a and 3b of the caliper body 3 provided at both side portions of the disc rotor 2.

The caliper body 3 is formed in a monocoque structure integrally including the pair of action parts 3a and 3b and a bridge part that straddles and connects the pair of action parts 3a and 3b on a disc outer peripheral side. The bridge part includes a disc turn-in side bridge part 3c, a disc turn-out side bridge part 3d, and an intermediate bridge part 3e provided between the disc turn-in side bridge part 3c and the disc turn-out side bridge part 3d. A first ceiling opening 3f is formed between the disc turn-in side bridge part 3c and the intermediate bridge part 3e, and a second ceiling opening 3g is formed between the disc turn-out side bridge part 3d and the intermediate bridge part 3e.

In each of the action parts 3a and 3b, two cylinder holes 3h capable of accommodating a piston 5 are formed to face each other, and a hydraulic chamber (not illustrated) is defined between each piston 5 and the cylinder hole 3h.

Mounting boss parts 3i and 3i in a disc radial direction are formed on the disc turn-in side and the disc turn-out side of one action part 3a disposed on a vehicle body outer side, and a mounting bolt insertion hole 3j in the disc radial direction is formed in each mounting boss part 3i. Mounting bolts (not illustrated) are inserted into respective mounting bolt insertion holes 3j and screwed into caliper mounting portions provided on a vehicle body side, whereby the caliper body 3 is mounted on the vehicle body.

As illustrated in FIG. 1, a friction pad accommodating portion 6 for accommodating the friction pad 4 is formed inside each of the action parts 3a and 3b. The friction pad accommodating portion 6 includes a turn-in side torque receiving surface 6a formed on a caliper body inner side with respect to the first ceiling opening 3f and on the disc turn-in side with respect to the first ceiling opening 3f, a turn-out side torque receiving surface 6b formed on the caliper body inner side with respect to the second ceiling opening 3g and on the disc turn-out side with respect to the second ceiling opening 3g, and pad supports 6c and 6c that support an inner side of the friction pad 4 in the disc radial direction.

The friction pad 4 is formed by attaching four linings 4c (friction parts of the invention) to one side surface 4b of a back plate 4a. In the back plate 4a, a lining attachment portion 4d to which the lining 4c is attached is formed on the one side surface 4b, and eight projection parts 4f projecting toward an outer side in the disc radial direction are formed integrally with the back plate 4a on an end surface 4e on the outer side in the disc radial direction adjacent to the one side surface 4b.

Four projection parts 4f are provided on the disc turn-in side of the back plate 4a, and four projection parts 4f are provided on the disc turn-out side. The four projection parts 4f provided on the disc turn-in side are inserted into the first ceiling opening 3f, and the four projection parts 4f provided on the disc turn-out side are inserted into the second ceiling opening 3g. On the side of the one side surface 4b of each projection part 4f, a projection 4g projecting toward the disc rotor 2 side (projecting in a thickness direction of the friction pad 4) is formed integrally with the projection part 4f.

Further, on an end surface 4h on an inner side in the disc radial direction adjacent to the one side surface 4b of the back plate 4a, six disc radial direction inner projection parts 4i projecting toward the inner side in the disc radial direction are formed integrally with the back plate 4a. Three disc radial direction inner projection parts 4i are formed on the disc turn-in side and three disc radial direction inner projection parts 4i are formed on the disc turn-out side substantially corresponding to the positions where the projection parts 4f are formed.

The caliper body 3 is provided with four first caliper projection parts 3k (caliper projection parts of the invention) projecting toward an outer side of the caliper body from each of the first ceiling opening 3f and the second ceiling opening 3g throughout one action part 3a in accordance with projecting positions of the projection parts 4f. Similarly, four first caliper projection parts 3k (caliper projection parts of the invention) projecting toward the outer side of the caliper body from each of the first ceiling opening 3f and the second ceiling opening 3g throughout the other action part 3b are provided. Further, in accordance with projecting positions of the disc radial direction inner projection parts 4i, three second caliper projection parts 3n projecting toward the outer side of the caliper body from disc radial direction inner side portions 3m and 3m of the respective action parts 3a and 3b are formed on each of the disc turn-out side and the disc turn-in side.

Since the disc brake 1 according to the embodiment is formed as described above, braking heat generated by sliding contact between the friction pad 4 and the disc rotor 2 during braking can be released to the outside air from the first ceiling opening 3f and the second ceiling opening 3g via the plurality of projection parts 4f projecting to the outer side of the caliper body 3. In addition, by providing the projection 4g at each projection part 4f, surface area of the friction pad 4 can be increased while reducing a projecting amount of the projection part 4f, and the cooling effect can be improved. Further, since the back plate 4a, the projection parts 4f, and the projections 4g are integrally formed, heat transfer efficiency is good, and the number of components does not increase. Since the disc radial direction inner projection part 4i is provided on the end surface 4h of the back plate 4a on the inner side in the disc radial direction, the surface area of the friction pad 4 can be further increased, and the cooling effect can be further improved.

Further, since the projection 4g projects from the projection part 4f toward the disc rotor 2 side, there is no possibility that the projection 4g interferes with components around the caliper body. Further, since the lining attachment portion 4d is provided on the one side surface 4b of the back plate 4a and the projection 4g is provided on the one side surface 4b side of the projection part 4f, there is no possibility that the projection part 4f and the projection 4g affect an attaching operation when attaching the lining 4c to the back plate 4a.

Further, since the first caliper projection part 3k corresponding to the projection part 4f and the second caliper projection part 3n corresponding to the disc radial direction inner projection part 4i are formed on the caliper body 3, surface area of the caliper body 3 can be increased, and the braking heat transmitted to the caliper body 3 can be favorably dissipated. Further, since the first caliper projection part 3k is formed in accordance with the projecting position of the projection part 4f and the second caliper projection part 3n is formed in accordance with the projecting position of the disc radial direction inner projection part 4i, the appearance is improved and the design of the disc brake 1 can be improved.

Although eight projection parts are provided on the back plate in the embodiment described above, the number of projection parts is freely set. Further, the projection part is not limited to being provided on the disc turn-in side and the disc turn-out side of the back plate, and may be provided on only one of the disc turn-in side and the disc turn-out side.

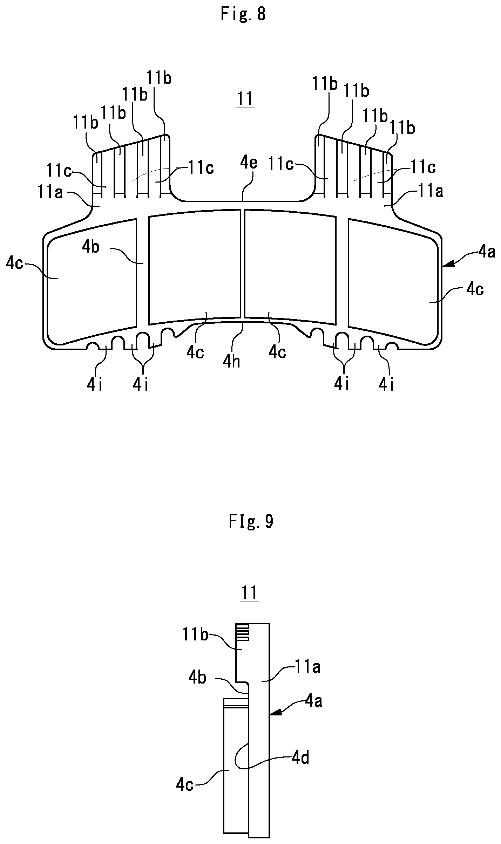

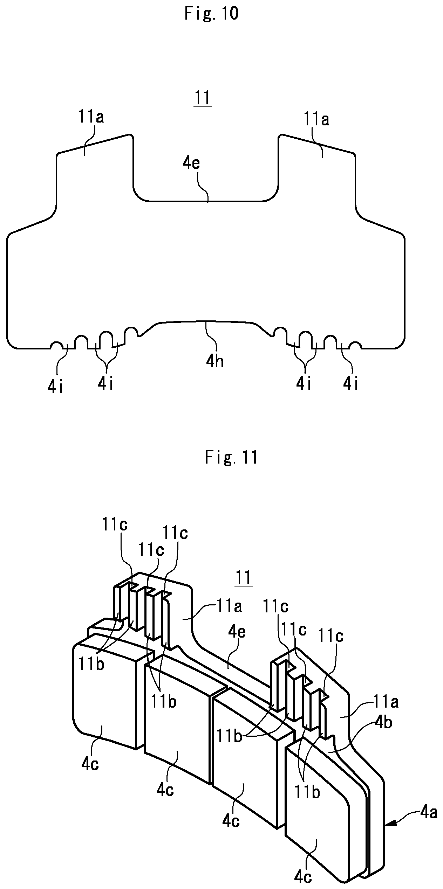

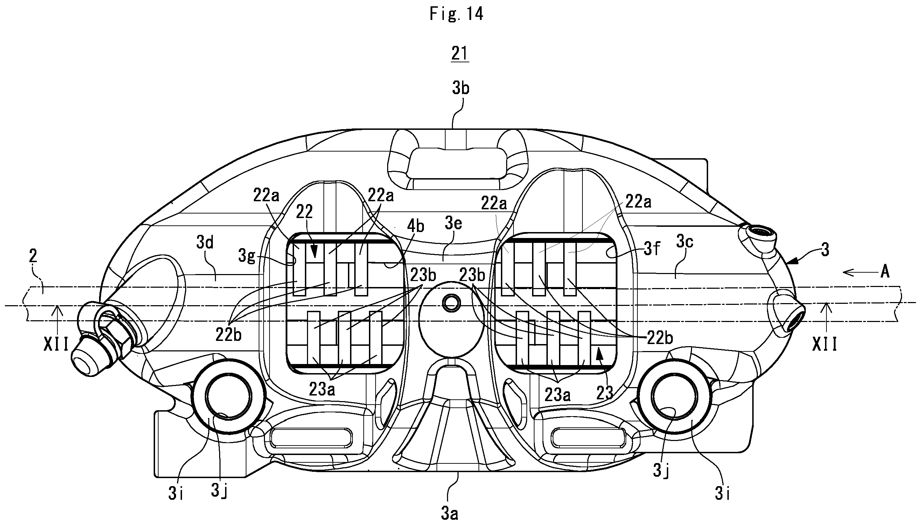

FIGS. 8 to 15 illustrate other embodiments of the invention, the same elements as those according to the first embodiment are denoted by the same reference signs, respectively, and a detailed description thereof will be omitted.

FIGS. 8 to 11 illustrate a friction pad 11 of a disc brake according to a second embodiment of the invention. In the friction pad 11, a pair of projection parts 11a and 11a projecting toward the outer side in the disc radial direction are formed integrally with the back plate 4a on the disc turn-in side and the disc turn-out side of the end surface 4e of the back plate 4a. The projection part 11a on the disc turn-in side is inserted into the first ceiling opening 3f, and the projection part 11a on the disc turn-out side is inserted into the second ceiling opening 3g.

On the side of the one side surface 4b of each projection part 11a, four projections 11b projecting toward the disc rotor 2 side are formed integrally with the projection part 11a. The projection 11b extends in the disc radial direction, and a groove 11c in the disc radial direction is provided between adjacent projections 11b.

Although the projection parts are provided on the disc turn-in side and the disc turn-out side of the back plate in the above-described embodiment, the projection part may be provided on only one of the disc turn-in side and the disc turn-out side. In addition, the number of projections provided on the projection part is freely set, and for example, one projection having substantially the same length in a disc circumferential direction as a length of the projection part in the disc circumferential direction may be provided.

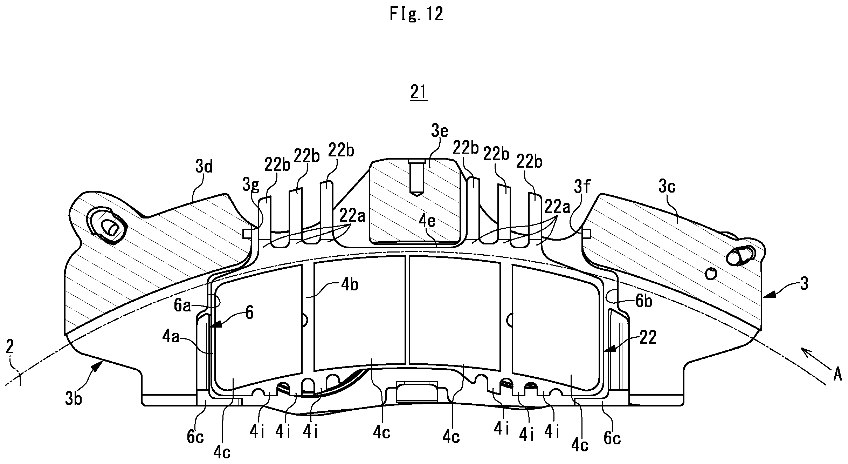

FIGS. 12 to 15 illustrate a disc brake 21 according to a third embodiment of the invention. The disc brake 21 includes a pair of friction pads 22 and 23 at both side portions of the disc rotor 2.

In one friction pad 22, the lining 4c is attached to the one side surface 4b of the back plate 4a. Further, on the end surface 4e on the outer side in the disc radial direction adjacent to the one side surface 4b, six projection parts 22a projecting toward the outer side in the disc radial direction are formed integrally with the back plate 4a.

Three projection parts 22a are provided on the disc turn-in side of the back plate 4a, and three projection parts 22a are provided on the disc turn-out side. The three projection parts 22a provided on the disc turn-in side are inserted into the first ceiling opening 3f, and the three projection parts 22a provided on the disc turn-out side are inserted into the second ceiling opening 3g. Further, on the side of the one side surface 4b of each projection part 22a, a projection 22b projecting toward the disc rotor 2 side is formed integrally with the projection part 22a.

In the other friction pad 23, similarly to the one friction pad 22, a lining is attached to one side surface of the back plate, and six projection parts 23a projecting toward the outer side in the disc radial direction are formed integrally with the back plate on an end surface on the outer side in the disc radial direction adjacent to the one side surface.

Similarly to the projection part 22a of the one friction pad, three projection parts 23a are formed on the disc turn-in side of the back plate and three projection parts 23a are formed on the disc turn-out side. The three projection parts 23a provided on the disc turn-in side are inserted into the first ceiling opening 3f, and the three projection parts 23a provided on the disc turn-out side are inserted into the second ceiling opening 3g. Further, on the side of the one side surface of each projection part 23a, a projection 23b projecting toward the disc rotor 2 side is formed integrally with the projection part 23a.

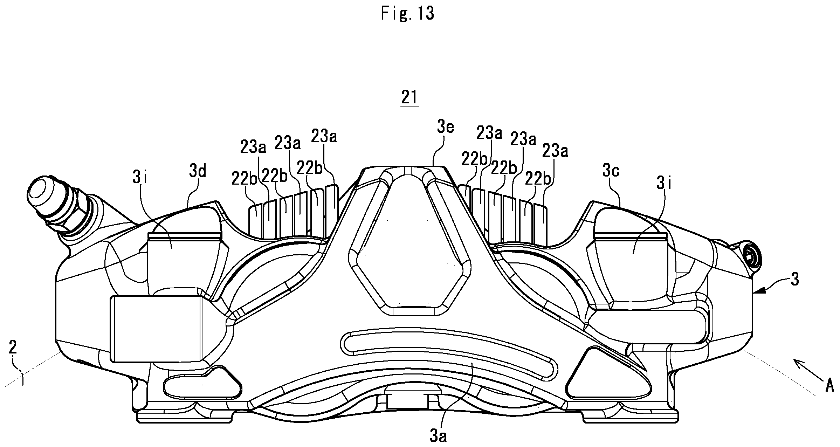

As illustrated in FIGS. 13 to 15, the projections 22b and 23b of both friction pads 22 and 23 are formed such that the projection part 22a (projection 22b) of one friction pad 22 and the projection part 23a (projection 23b) of the other friction pad 23 are alternately arranged in the circumferential direction of the disc rotor 2 when the friction pads 22 and 23 are assembled to the caliper body 3.

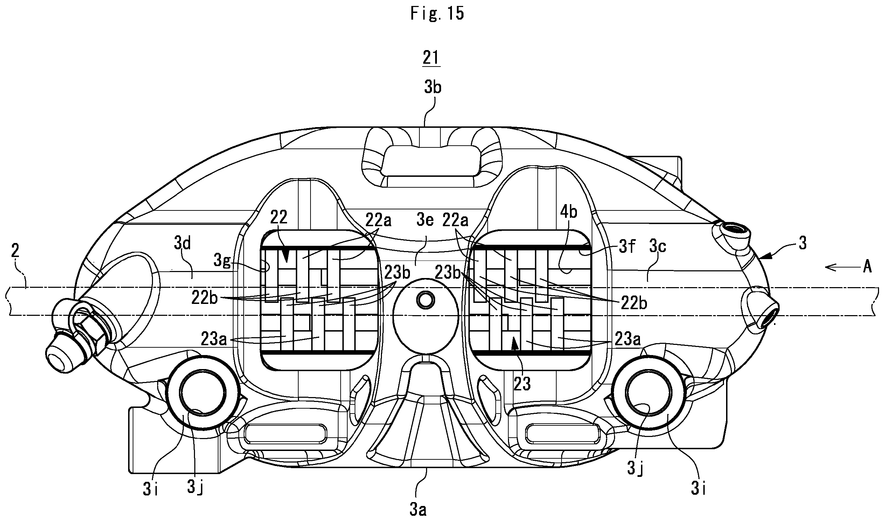

Accordingly, as illustrated in FIG. 15, even when both the friction pads 22 and 23 approach each other toward the disc rotor 2 during the operation of the disc brake 21, there is no possibility that the facing projections 22b and 23b interfere with each other. Accordingly, a length of the projections 22b and 23b in a disc axial direction (thickness direction of the friction pad) can be increased, and the cooling effect can be improved.

The disc brake according to the invention is not limited to each of the above-described embodiments, and the number of ceiling openings formed in the caliper body is freely set, and the projection part may be appropriately formed according to the position of the ceiling opening. Further, the caliper body is not limited to the monocoque structure, and may have a divided structure.

Further, the projection part of the friction pad according to the invention may be provided with a projection projecting toward a side opposite to the disc rotor side in addition to the projection projecting toward the disc rotor side. Further, the friction pad may not be provided with the disc radial direction inner projection part, and the projection part and the projection may not be formed integrally with the back plate. Further, the friction pad according to the invention is not limited to the friction pad in which the lining is attached to the back plate, and may be a friction pad in which the lining is sintered on the back plate. The friction pad is not limited to a sintered material or a resin material, and may be a friction pad in which the friction part and the back plate are integrally formed of a carbon material or the like.

### Reference Signs List

- 1:: disc brake
- 2:: disc rotor
- 3:: caliper body
- 3a, 3b:: action part
- 3c:: disc turn-in side bridge part
- 3d:: disc turn-out side bridge part
- 3e:: intermediate bridge part
- 3f:: first ceiling opening
- 3g:: second ceiling opening
- 3h:: cylinder hole
- 3i:: mounting boss part
- 3j:: mounting bolt insertion hole
- 3k:: first caliper projection part
- 3m:: disc radial direction inner side portion
- 3n:: second caliper projection part
- 4:: friction pad
- 4a:: back plate
- 4b:: one side surface
- 4c:: lining (friction part)
- 4d:: lining attachment portion
- 4e:: end surface
- 4f:: projection part
- 4g:: projection
- 4h:: end surface
- 4i:: disc radial direction inner projection part
- 5:: piston
- 6:: friction pad accommodating portion
- 6a:: turn-in side torque receiving surface
- 6b:: turn-out side torque receiving surface
- 6c:: pad support
- 11:: friction pad
- 11a:: projection part
- 11b:: projection
- 11c:: groove
- 21:: disc brake
- 22, 23:: friction pad, 22a, 23a: projection part
- 22b, 23b:: projection

## Claims

1. A disc brake comprising:
a caliper body having a ceiling opening in a bridge part straddling an outer periphery of a disc rotor; and
a pair of friction pads disposed on both sides of the disc rotor with the disc rotor interposed therebetween, wherein
each of the friction pads has a projection part, to be inserted into the ceiling opening, on a back plate provided with a friction part, and
the projection part has a projection projecting at least toward a disc rotor side.

2. The disc brake according to claim 1, wherein
a plurality of the projection parts are provided.

3. The disc brake according to claim 1, wherein
a plurality of the projections are provided.

4. The disc brake according to claim 3, wherein
the projections formed on the pair of friction pads project toward the disc rotor side, and the projections of one of the friction pads and the projections of the other friction pad are alternately arranged in a circumferential direction of the disc rotor.

5. The disc brake according to claim 1, wherein
the back plate of the friction pad includes a disc radial direction inner projection part projecting toward an inner side in a disc radial direction.

6. The disc brake according to any one of claims 1 to 5, wherein
the caliper body includes a caliper projection part projecting toward an outer side of the caliper body in accordance with a projecting position of the projection part.

7. A friction pad of a disc brake, the friction pad being provided with a friction part on one side surface of a back plate, wherein
the back plate has a projection part projecting in one direction from an end surface adjacent to the one side surface, and
the projection part has a projection projecting in a thickness direction of the friction pad on at least a side of the one side surface.

8. The friction pad of a disc brake according to claim 7, wherein
a plurality of the projection parts are provided.

9. The friction pad of a disc brake according to claim 7 or 8, wherein
a plurality of the projections are provided.
